# EUROPÄISCHE PATENTANMELDUNG

(11) **EP 3 747 805 A1**
(43) Veröffentlichungstag der Anmeldung: **09.12.2020**
(21) Anmeldenummer: 20175674.9
(22) Anmeldetag: 20.05.2020
(51) Int. Cl.: B65G 21/20

(54) **VORRICHTUNG ZUM ÜBERWACHEN VON BEHÄLTERN UND VERFAHREN ZUM POSITIONIEREN VON SENSOREN**

(30) Priorität: 05.06.2019 DE 102019115179
(71) Anmelder: KRONES AG, 93073 Neutraubling (DE)
(72) Erfinder: Kinsky, Rico, 93073 Neutraubling (DE)
(74) Vertreter: v. Bezold & Partner Patentanwälte - PartG mbB

(57) **Zusammenfassung**

Die Erfindung betrifft eine Vorrichtung (10) zum Überwachen von Behältern. Die Vorrichtung (10) weist mehrere Führungselemente (14) auf, die zwischen sich mehrere Transportgassen (20) für die Behälter bilden. Die Vorrichtung (10) weist mehrere Sensoren (16), die über den Transportgassen (20) angeordnet sind, und eine Positioniervorrichtung (18) auf. Die Positioniervorrichtung (18) ist dazu ausgebildet, die mehreren Sensoren (16) bei einer Verstellung der mehreren Führungselemente (14) selbsttätig mittig über der jeweiligen Transportgasse (20) zu positionieren. Eine Umstellung der Vorrichtung (10) auf andere Behälterformate kann daher in kurzer Zeit und ohne großen Aufwand erfolgen.

## Beschreibung

### Technisches Gebiet

Die Erfindung betrifft eine Vorrichtung zum Überwachen von Behältern, vorzugsweise zur Einzeltransportgassenabfragung, für eine Behälterbehandlungsanlage. Die Erfindung betrifft ferner ein Verfahren zum Positionieren mehrerer Sensoren zum Überwachen von Behältern, vorzugsweise zur Einzeltransportgassenabfragung, für eine Behälterbehandlungsanlage.

### Technischer Hintergrund

Bei bekannten Transportvorrichtungen, die mehrere durch Führungselemente gebildete Transportgassen, aufweisen, ist es möglich, dass die Führungselemente quer zur Transportrichtung verstellbar sind. Damit kann eine Breite der Transportgassen an ein jeweiliges Behälterformat angepasst und Behälterformatwechsel ermöglicht werden. Den Transportgassen können Sensoren zur Einzelgassenabfragung zugeordnet sein. Herkömmlich sind die Führungselemente einerseits und die Sensoren andererseits unabhängig voneinander verstellbar. Dadurch muss nach einer mehr oder minder aufwändigen Verstellung der Führungselemente zusätzlich noch eine mehr oder minder aufwändige Verstellung der Sensoren durchgeführt werden. Eine Umstellung der bekannten Transportvorrichtung auf andere Behälterformate kann daher äußerst zeitraubend und mühsam sein.

Die EP 1 507 722 B1 offenbart eine Transportvorrichtung für Behälter mit verstellbaren Führungsgeländern und Sensoren zum Überwachen der Gassen jeweils zwischen den Führungsgeländern. Im Falle einer Verstellung der Führungsgeländer wird jeder Sensor automatisch mitverschoben, wobei dessen seitlicher Abstand bezüglich eines jeweils zugehörigen Führungsgeländers unverändert bleibt. Daher muss durch eine entsprechende Breitendimensionierung der Schwenkklappen der Sensoren sichergestellt sein, dass diese in der gewünschten Weise bei allen vorkommenden Behälterarten durch das obere Behälterende betätigt werden.

Der Erfindung liegt die Aufgabe zu Grunde, eine alternative und/oder verbesserte Technik zum Positionieren der Sensoren zur Überwachung von Behältern, die von einer Transportvorrichtung mit mehreren verstellbaren Transportgassen transportiert werden, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung zum Überwachen von Behältern, vorzugsweise zur Einzeltransportgassenabfragung, für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist mehrere Führungselemente auf. Die mehreren Führungselemente sind quer zu einer Transportrichtung der Behälter (z. B. parallel) voneinander beabstandet. Die mehreren Führungselemente bilden zwischen sich mehrere (z. B. einspurige) Transportgassen für die Behälter (z. B. durch längsseitiges Begrenzen der Transportgassen). Die mehreren Führungselemente sind quer zu der Transportrichtung zum Anpassen einer Breite der mehreren Transportgassen verstellbar (z. B. zum Umstellen eines Behälterformats). Die Vorrichtung weist mehrere Sensoren auf, die jeweils über einer der mehreren Transportgassen angeordnet sind. Die Vorrichtung weist eine Positioniervorrichtung auf, die dazu ausgebildet ist, die mehreren Sensoren bei einer Verstellung der mehreren Führungselemente quer zu der Transportrichtung selbsttätig (/automatisch) mittig über der jeweiligen Transportgasse zu positionieren, vorzugsweise durch Bewegen der mehreren Sensoren.

Vorzugsweise ermöglicht die Vorrichtung eine zuverlässige Überwachung der Transportgassen mittels der mehreren Sensoren durch deren mittige Positionierung. Somit kann beispielsweise beim Transport von Flaschen mit verringertem Halsdurchmesser durch die Transportgassen eine zuverlässige Erfassung ermöglicht werden. Da die Positioniervorrichtung die mittige Positionierung der mehreren Sensoren selbsttätig vornimmt, kann eine manuelle Justierung und Einrichtung der mehreren Sensoren bei Verstellung der Breite der Transportgassen entfallen. Eine Umstellung der Vorrichtung auf andere Behälterformate kann daher in kurzer Zeit und ohne großen Aufwand erfolgen. Zweckmäßig kann die Positioniervorrichtung die mehreren Sensoren bei Vergrößerung und/oder Verkleinerung der Breite der Transportgassen jeweils mittig über einer der Transportgassen positionieren.

In einem Ausführungsbeispiel ist die Positioniervorrichtung dazu ausgebildet, die mehreren Sensoren bei der Verstellung der mehreren Führungselemente in einer Querrichtung quer zu der Transportrichtung selbsttätig jeweils mittig bezüglich der Querrichtung zwischen zwei benachbarten Führungselementen der mehreren Führungselemente zu positionieren, vorzugsweise durch Bewegen der mehreren Sensoren. Durch die mittige Positionierung zwischen den Führungselementen kann gewährleistet werden, dass die mehreren Sensoren mittig über der jeweiligen Transportgasse positioniert sind.

In einem weiteren Ausführungsbeispiel ist die Positioniervorrichtung dazu ausgebildet, bei der Verstellung der mehreren Führungselemente quer zu der Transportrichtung eine mittige Positionierung der mehreren Sensoren über der jeweiligen Transportgasse zu halten, vorzugsweise durch Bewegen der mehreren Sensoren. Vorzugsweise kann die Positioniervorrichtung so ermöglichen, dass die mehreren Sensoren stets mittig über der jeweiligen Transportgasse positioniert sind, nämlich vor, während und nach der Verstellung der mehreren Führungselemente zum Anpassen der Breite der Transportgassen.

In einem weiteren Ausführungsbeispiel ist die Positioniervorrichtung mit den mehreren Führungselementen, vorzugsweise zum Folgen einer Bewegung der mehreren Führungselemente, gekoppelt, vorzugsweise berührungslos oder berührend. Alternativ oder zusätzlich ist die Positioniervorrichtung mit den mehreren Sensoren zum Bewirken einer Bewegung der mehreren Sensoren gekoppelt, vorzugsweise berührungslos oder berührend. Aufgrund der Kopplung kann eine Bewegung der Führungselemente beim Verstellen der Führungselemente auf einfache Weise auf eine daran angepasste Bewegung der Sensoren übertragen werden.

Zweckmäßig kann die Positioniervorrichtung zum Bewegen der mehreren Sensoren quer zu der Transportrichtung zum mittigen Positionieren der mehreren Sensoren ausgebildet sein.

In einer Ausführungsform ist die Positioniervorrichtung eine magnetische, mechanische und/oder motorische Positioniervorrichtung. Damit kann auf einfache Weise der selbsttätige Betrieb der Positioniervorrichtung ermöglicht werden.

In einer weiteren Ausführungsform ist die Positioniervorrichtung dazu ausgebildet, die mehreren Sensoren selbsttätig mittels Magnetkraft jeweils mittig über der jeweiligen Transportgasse zu positionieren. Alternativ oder zusätzlich ist die Positioniervorrichtung dazu ausgebildet, eine mittige Positionierung der mehreren Sensoren über der jeweiligen Transportgasse mittels Magnetkraft, vorzugsweise permanent, zu halten. Die Verwendung von Magneten, vorzugsweise Permanentmagneten, kann eine einfache, zuverlässige und verschleißarme Implementierung der Positioniervorrichtung ermöglichen.

In einer Ausführungsvariante tragen die mehreren Führungselemente jeweils einen (z. B. einzigen) Magnet, vorzugsweise Permanentmagnet. Vorzugsweise können die mehreren Führungselemente den Magnet jeweils mittels eines Verlängerungselements, vorzugsweise eines vertikal ausgerichteten Verlängerungselements, tragen. Somit kann eine Bewegung oder Verstellung eines Führungselements unmittelbar zu einer Bewegung oder Verstellung des durch das Führungselement getragenen Magneten führen. Die sich bewegenden Magnete können beispielsweise wiederum auf andere, mit den Sensoren gekoppelte Magnete wirken, um eine mittige Positionierung der Sensoren zu ermöglichen.

Zweckmäßig können die Verlängerungselemente jeweils an den Führungselementen, z. B. oben an den Führungselementen, angebracht sein und/oder sich in einer Vertikalrichtung nach oben erstrecken. Die von den Führungselementen getragenen Magnete können so auf einfache Weise auf Höhe der Positioniervorrichtung angeordnet sein, um dort eine Bewegung der Sensoren beim Verstellen der Führungselemente zu bewirken.

In einer Weiterbildung sind die von den mehreren Führungselementen getragenen Magnete beidseitig des jeweiligen Führungselements wirkend angeordnet. Damit kann zweckmäßig eine Magnetanzahl verringert werden, da die von den Führungselementen getragenen Magnete jeweils für beide von einem Führungselement begrenzte Transportgassen bzw. zur mittigen Positionierung der jeweils zugeordneten Sensoren wirken.

Es ist möglich, dass die von den mehreren Führungselementen getragenen Magnete in einem Durchgangsloch, vorzugweise einem Durchgangs-Langloch, angeordnet sind, z. B. einem Durchgangsloch des jeweiligen Verlängerungselements. Damit kann auf einfache Weise erreicht werden, dass die Magnete jeweils beidseitig des Führungselements auf zwei benachbarte Transportgassen bzw. zur mittigen Positionierung der jeweils zugeordneten Sensoren wirken.

In einer weiteren Ausführungsvariante sind die von den mehreren Führungselementen getragenen Magnete höhenverstellbar (z. B. an dem jeweiligen Verlängerungselement) angebracht, vorzugweise mittels Befestigung an einem vertikal ausgerichteten Langloch (z. B. des jeweiligen Verlängerungselements). Damit kann die Anpassbarkeit an unterschiedlich hoch aufgehängten Positioniervorrichtungen in unterschiedlichen Anlagen verbessert werden.

In einem Ausführungsbeispiel weist die Positioniervorrichtung mehrere Positionierelemente, die jeweils einen der mehreren Sensoren tragen, auf. Alternativ oder zusätzlich weist die Positioniervorrichtung mindestens ein weiteres Führungselement (z. B. zwei weitere Führungselemente) auf. Das mindestens eine weitere Führungselement kann sich angewinkelt, vorzugsweise quer, zu der Transportrichtung erstrecken bzw. ausgerichtet sein. Vorzugsweise können die mehreren Positionierelemente (z. B. individuell) bewegbar, vorzugsweise verschiebbar, an dem mindestens einen weiteren Führungselement geführt sein (z. B. über Gleitlager oder drehbare Rollen). Mittels der Positionierelemente können die Sensoren individuell bewegt werden, um zweckmäßig individuell einer Verbreiterung oder Verschmälerung und ggf. einer Verlagerung der jeweils zugeordneten Transportgasse zu folgen.

In einer Weiterbildung weisen die mehreren Positionierelemente jeweils mindestens einen Magnet, vorzugsweise Permanentmagnet, auf. Mittels der Magnete können die Positionierelemente und somit die Sensoren auf einfache Weise zum mittigen Positionieren bewegt werden.

In einem weiteren Ausführungsbeispiel stehen die von den mehreren Führungselementen getragenen Magnete und die Magnete der mehreren Positionierelemente zum mittigen Positionieren der mehreren Sensoren in magnetischer Wechselwirkung miteinander. Damit kann eine Bewegung der von den mehreren Führungselementen getragenen Magnete eine Bewegung der Positionierelemente und damit der Sensoren bewirken.

In einem weiteren Ausführungsbeispiel sind die von den mehreren Führungselementen getragenen Magnete und die Magnete der mehreren Positionierelemente auf gleicher Höhe und/oder entlang einer Achse (z. B. Querachse quer zur Transportrichtung) angeordnet. So kann die magnetische Wechselwirkung zwischen den Magneten besonders wirksam und gezielt genutzt werden.

In einer Ausführungsform liegen sich die von den mehreren Führungselementen getragenen Magnete und die Magnete der mehreren Positionierelemente zum Abstoßen der mehreren Positionierelemente jeweils paarweise gleichpolig gegenüber (z. B. ein magnetischer Nordpol eines Magneten gegenüber einem magnetischen Nordpol eines anderen Magneten; ein magnetischer Südpol eines Magneten gegenüber einem magnetischen Südpol eines anderen Magneten). Durch Abstoßen der Magnete voneinander können die Positionierelemente die Sensoren somit jeweils mittig über der zugeordneten Transportgasse positionieren.

In einer weiteren Ausführungsform weisen die mehreren Positionierelemente jeweils einen ersten Magnet und einen zweiten Magnet auf, die auf einander entgegengesetzten Seiten des jeweiligen Positionierelements und/oder zwischen von zwei benachbarten Führungselementen getragenen Magneten angeordnet sind. Zweckmäßig können so die von zwei benachbarten Führungselementen getragene Magnete jeweils auf ein Positionierelement wirken, sodass eine mittige Positionierung dazwischen auf einfache Weise ermöglicht wird.

In einer Weiterbildung weisen die mehreren Positionierelemente jeweils einen Abstandhalter auf, der den ersten Magnet und den zweiten Magnet beabstandet zueinander hält. So kann eine Beeinflussung der Magnete untereinander verringert oder verhindert werden.

In einer Ausführungsvariante sind der erste Magnet und der zweite Magnet mit unterschiedlicher Magnetpolarität nach außen gewandt. Dies kann beispielsweise ermöglichen, dass je Führungselement nur jeweils ein Magnet umfasst sein muss, der für beide angrenzenden Transportgassen wirkt.

In einer weiteren Ausführungsvariante ist der erste Magnet und/oder der zweite Magnet mittels eines elastischen Elements, vorzugsweise einer Druckfeder, vorgespannt, vorzugsweise nach außen. Alternativ oder zusätzlich können der erste Magnet und der zweite Magnet mittels eines elastischen Elements, vorzugsweise einer Druckfeder, aneinander abgestützt sein. Das elastische Element kann ermöglichen, dass auch vergleichsweise enge Transportgassen realisierbar sind, da der erste und zweite Magnet in diesen Fällen einen geringeren Abstand zueinander einnehmen können. Ebenso können auch vergleichsweise breite Transportgassen realisierbar sein, da der erste und zweite Magnet in diesen Fällen einen größeren Abstand zueinander einnehmen können (und somit einen geringen Abstand zu den von den Führungselementen getragenen Magneten).

In einem weiteren Ausführungsbeispiel sind die mehreren Sensoren dazu ausgebildet, einen Durchlauf eines Behälters durch die jeweilige Transportgasse zu erfassen. Alternativ oder zusätzlich sind die mehreren Sensoren als taktile oder berührungslose Sensoren ausgeführt, vorzugsweise als Lichttaster oder Ultraschallsensoren.

Die Erfindung betrifft auch ein Verfahren zum Positionieren mehrerer Sensoren zum Überwachen von Behältern, vorzugsweise zur Einzeltransportgassenabfragung, für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Das Verfahren weist ein Verstellen einer Breite mehrerer (z. B. einspuriger) Transportgassen für die Behälter auf. Das Verfahren weist zudem ein selbsttätiges (/automatisches) mittiges Positionieren der mehreren Sensoren über jeweils einer der mehreren Transportgassen während des Verstellens der Breite der mehreren Transportgassen auf, z. B. mittels einer Positioniervorrichtung, die zweckmäßig mit den mehreren Sensoren und mehreren Führungselementen der mehreren Transportgassen gekoppelt ist. Das Verfahren ermöglicht die Erzielung der gleichen Vorteile wie die hierin offenbarte Vorrichtung zum Überwachen von Behältern.

In einem Ausführungsbeispiel ist das selbsttätige mittige Positionieren durch Magnetkraft, mechanisch und/oder motorisch bewirkt. Damit kann auf einfache Weise das selbsttätige mittige Positionieren ermöglicht werden.

In einem weiteren Ausführungsbeispiel verwendet das Verfahren die hierin offenbarte Vorrichtung zum Überwachen von Behältern.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Überwachen von Behältern gemäß einem Ausführungsbeispiel der vorliegenden Offenbarung;
- Figur 2: eine Draufsicht auf die beispielhafte Vorrichtung;
- Figur 3: eine Schnittansicht der beispielhaften Vorrichtung entlang der Linie A-A in Figur 2;
- Figur 4: eine Detailansicht des Details Z aus Figur 3;
- Figur 5: eine Schnittansicht der beispielhaften Vorrichtung entlang der Linie B-B in Figur 2; und
- Figur 6: eine Detailansicht des Details Y aus Figur 1.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

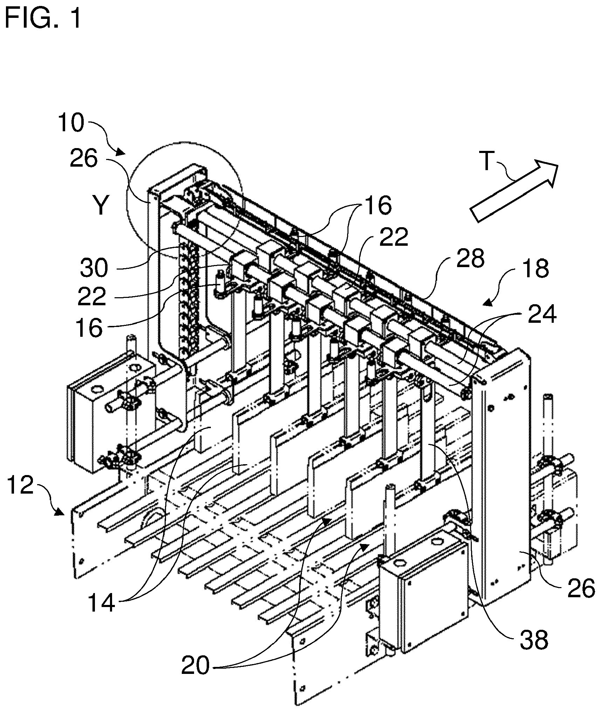

Die Figuren 1 bis 3 zeigen eine Vorrichtung 10 zum Überwachen von Behältern, z. B. Flaschen, Dosen, Weichpackungen usw., in unterschiedlichen Ansichten. Die Vorrichtung 10 kann in einer Behälterbehandlungsanlage zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel, umfasst sein.

Die Vorrichtung 10 ist an einer Transportvorrichtung 12 zum Transportieren der Behälter angebracht. Die Transportrichtung 12 ist in den Figuren 1 bis 3 nur abschnittsweise dargestellt. Die Transportvorrichtung 12 ist zum Transportieren der Behälter in einer Transportrichtung T ausgebildet. Die Transportvorrichtung 12 kann beispielsweise ein oder mehrere Förderbänder zum stehenden Transport der Behälter aufweisen.

Die Vorrichtung 10 weist mehrere Führungselemente 14, mehrere Sensoren 16 und eine Positioniervorrichtung 18 auf. Aus Übersichtsgründen sind in den Figuren 1 bis 3 nur einige der Führungselemente 14 und der mehreren Sensoren 16 mit einem Bezugszeichen versehen.

Die Führungselemente 14 sind in den Figuren 1 bis 3 nur abschnittsweise dargestellt. Die Führungselemente 14 sind parallel zu der Transportrichtung T ausgerichtet. Die Führungselemente 14 erstrecken sich parallel zueinander. Die Führungselemente 14 sind quer zu der Transportrichtung T voneinander beabstandet. Die Führungselemente 14 bilden zwischen sich zweckmäßig einspurige Transportgassen 20 für die mittels der Transportvorrichtung 12 transportierten Behälter. Jeweils zwei der Führungselemente 14 begrenzen zwischen sich eine der Transportgassen 20. Die Führungselemente 14 dienen so als Trenn- oder Separierelemente zwischen den Transportgassen 20. Aus Übersichtsgründen sind in den Figuren 1 bis 3 auch jeweils nur einige der Transportgassen 20 mit einem Bezugszeichen versehen.

Im dargestellten Ausführungsbeispiel umfasst die Vorrichtung 10 genau sechs Führungselemente 14 und entsprechend fünf Transportgassen 20. Es ist auch möglich, dass die Vorrichtung 10 mehr oder weniger Führungselemente 14 und/oder Transportgassen 20 umfasst. Im dargestellten Ausführungsbeispiel sind die Führungselemente 14 plattenförmig und vertikal ausgerichtet ausgeführt. Es ist jedoch auch möglich, dass die Führungselemente 14 anders ausgerichtet und/oder ausgeführt sind, z. B. als Geländer.

Die Führungselemente 14 sind zumindest teilweise mittels eines Verstellmechanismus (nicht dargestellt) quer zu der Transportrichtung T verstellbar. Der Verstellmechanismus kann beispielsweise manuell und/oder mittels einer Antriebseinheit beispielsweise hydraulisch, pneumatisch oder motorisch betätig sein. Derartige Verstellmechanismen sind an sich bekannt und hier nicht näher beschrieben. Durch die Verstellung der Führungselemente 14 kann eine (Führungs-)Breite der Transportgassen 20 eingestellt werden. So können beispielsweise Behälterformatumstellungen zwischen unterschiedlich großen bzw. breiten Behältern ermöglicht werden. Beispielsweise können die Führungselemente 14 zum Verringern eines Relativabstands zwischen den Führungselementen 14 verstellt werden, wenn auf Behälter mit geringerer Breite umgestellt wird. Die Führungselemente 14 können auch zum Vergrößern eines Relativabstands zwischen den Führungselementen 14 verstellt werden, wenn auf Behälter mit größerer Breite umgestellt wird.

Die Sensoren 16 sind oberhalb der Transportgassen 20 angeordnet. Die Sensoren 16 sind jeweils einer der Transportgassen 20 zugeordnet. Im dargestellten Ausführungsbeispiel sind jeweils zwei Sensoren 16 pro Transportgasse 20 angeordnet. Es ist auch möglich, dass beispielsweise nur ein Sensor 16 oder mehr als zwei Sensoren 16 pro Transportgasse 20 angeordnet sind.

Die Sensoren 16 sind auf die Transportgassen 20 gerichtet. Die Sensoren 16 sind zum Überwachen der Transportgassen 20 bzw. der durch die Transportgassen 20 transportierten Behälter ausgebildet. Zweckmäßig können die Sensoren 16 zur Erfassung eines Vorhandenseins eines Behälters beim Durchfahren der Vorrichtung 10 ausgebildet sein. Die Sensoren 16 können zumindest teilweise als berührungslose Sensoren ausgeführt sein, z. B. als Ultraschallsensoren oder als optische Sensoren, wie beispielsweise Lichttaster, Laserscanner oder Kameras. Es ist allerdings auch möglich, dass die Sensoren 16 als taktile Sensoren ausgeführt sind, z. B. als Schwenkklappen-Sensoren.

Die Positioniervorrichtung 18 dient zum selbsttätigen bzw. automatischen Positionieren der Sensoren 16. Die Positioniervorrichtung 18 positioniert die Sensoren 16 bezüglich einer Querrichtung, die quer zur Transportrichtung T verläuft. Zweckmäßig positioniert die Positioniervorrichtung 18 die Sensoren 16 so, dass diese jeweils immer mittig über der jeweils zugeordneten Transportgasse 20 positioniert sind. Somit kann die Positioniervorrichtung 18 die Sensoren 16 bei einer Verstellung der Führungselemente 14 zumindest teilweise bewegen, um die mittige Positionierung über der jeweils zugeordneten Transportgasse 20 zu halten. Die mittige Positionierung der Sensoren 16 über den jeweils zugeordneten Transportgassen 20 ermöglicht eine zuverlässige Erfassung von Behältern durch die Sensoren 16.

Zum Positionieren der Sensoren 16 weist die Positioniervorrichtung 18 mehrere Positionierelemente 22 und zwei Führungselemente 24 auf. Aus Gründen der Übersichtlichkeit sind in den Figuren 1 bis 3 nicht alle Positionierelemente 22 mit einem Bezugszeichen versehen.

Die Positionierelemente 22 sind durch die Führungselemente 24 geführt. Die Positionierelemente 22 sind entlang der Führungselemente 24 bewegbar, zweckmäßig quer zu der Transportrichtung T. Beispielsweise stehen die Positionierelemente 22 mittels Gleitlager in Gleitkontakt, wie dargestellt ist, oder mittels Rollen oder Rädern in Rollkontakt mit den Führungselementen 24. Zweckmäßig ist jeweils eines der Positionierelemente 22 über einer der Transportgassen 20 positioniert. Die Positionierelemente 22 sind somit jeweils einer der Transportgassen 20 zugeordnet. Zweckmäßig kann für jede Transportgasse 20 jeweils ein Positionierelement 22 umfasst sein. Im dargestellten Ausführungsbeispiel ist für jede der fünf Transportgassen 20 jeweils ein Positionierelement 22 umfasst (also insgesamt fünf Positionierelemente 22). Es ist möglich, dass mehr oder weniger Positionierelemente 22 umfasst sind, insbesondere in Abhängigkeit von einer Anzahl an Transportgassen.

Die Führungselemente 24 sind quer zu der Transportrichtung T ausgerichtet. Die Führungselemente 24 erstrecken sich parallel zueinander. Die Führungselemente 24 sind oberhalb der Transportgassen 20 angeordnet. Die Führungselemente 24 können beispielsweise als Führungsstäbe, wie dargestellt ist, oder als Führungsschienen oder Führungsnuten ausgeführt sein. Es ist möglich, dass mehr oder weniger als zwei Führungselemente 24 zum Führen der Positionierelemente 22 vorgesehen sind.

Die Führungselemente 24 sind oberhalb der Transportgassen 20 durch zwei Halterungen 26 gehalten. Die Führungselemente 24 sind zwischen den Halterungen 26 angeordnet. Die Halterungen 26 können an den Längsaußenseiten der Transportvorrichtung 12 angebracht sein. Vorzugsweise sind die Halterungen 26 höhenverstellbar an der Transportvorrichtung 12 zum Einstellen einer Höhenposition der Sensoren 16 und der Positioniervorrichtung 18 angebracht. Alternativ oder zusätzlich ist die Positioniervorrichtung 18 bzw. sind die Führungselemente 24 höhenverstellbar an den Halterungen 26 angebracht.

Wie in den Figuren 1, 3, 5 und 6 dargestellt ist, kann die Vorrichtung 10 zweckmäßig ferner ein Rinnenelement 28 aufweisen. Das Rinnenelement 28 ist zwischen den Halterungen 26 angeordnet und zweckmäßig an diesen angebracht. Vorzugsweise kann das Rinnenelement 28 als eine Kabelrinne ausgeführt sein. Im Rinnenelement 28 können beispielsweise Signalkabel und/oder Leitungen aufgenommen sein. Die Signalkabel und/oder Leitungen können in dem Rinnenelement 28 in Richtung zu den Halterungen 26 geführt werden. Zweckmäßig können Signalkabel von und zu den Sensoren 16 in dem Rinnenelement 28 aufgenommen sein.

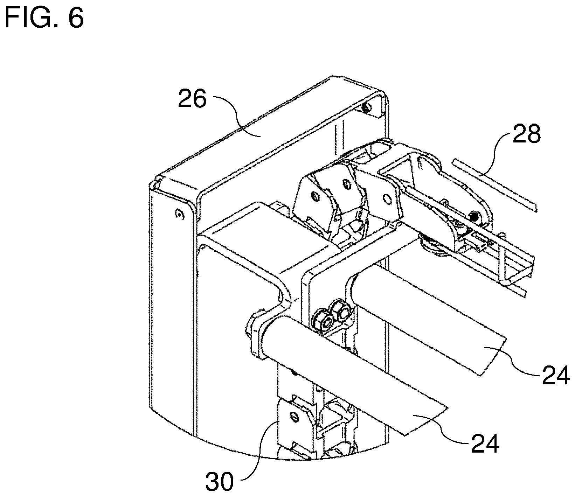

Die Halterungen 26 können beispielsweise innenseitig jeweils einen in Vertikalrichtung ausgerichteten Kanal 30 aufweisen. Die Kanäle 30 können zum Aufnehmen von Signalkabeln und/oder Leitungen der Vorrichtung 10 ausgebildet sein. Zweckmäßig können die Kanäle 30 als Kabelkanäle ausgeführt sein. Die Kanäle 30 sind mit dem Rinnenelement 28 verbunden. So können beispielsweise die Signalkabel der Sensoren 16 über das Rinnenelement 28 und einen der Kanäle 30 zu einer Steuereinheit zum Empfangen der Signale von den Sensoren 16 geführt werden. Es ist möglich, dass die Kanäle 30 durch mehrere gelenkig miteinander verbundene Kanalelemente aufgebaut sind, wie in Figur 6 dargestellt ist. Somit kann eine Umlenkung der Kanals 30 aus einer Vertikalausrichtung zu einer Horizontalausrichtung zum Verbinden mit dem Rinnenelement 28 ermöglicht werden (siehe Figur 6). Es ist auch möglich, dass beispielsweise nur eine der Halterungen 26 einen Kanal 30 aufweist.

Die Positionierelemente 22 sind so ausgeführt, dass sie sich bei Verstellung der Führungselemente 14 selbsttätig bewegen, um eine mittige Positionierung der Sensoren 16 über den jeweils zugeordneten Transportgassen 20 zu halten.

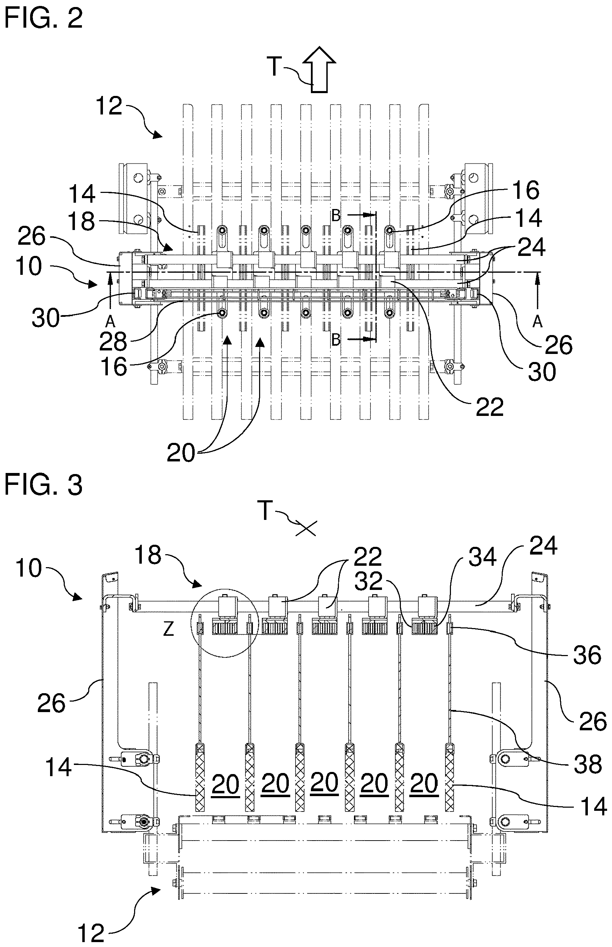

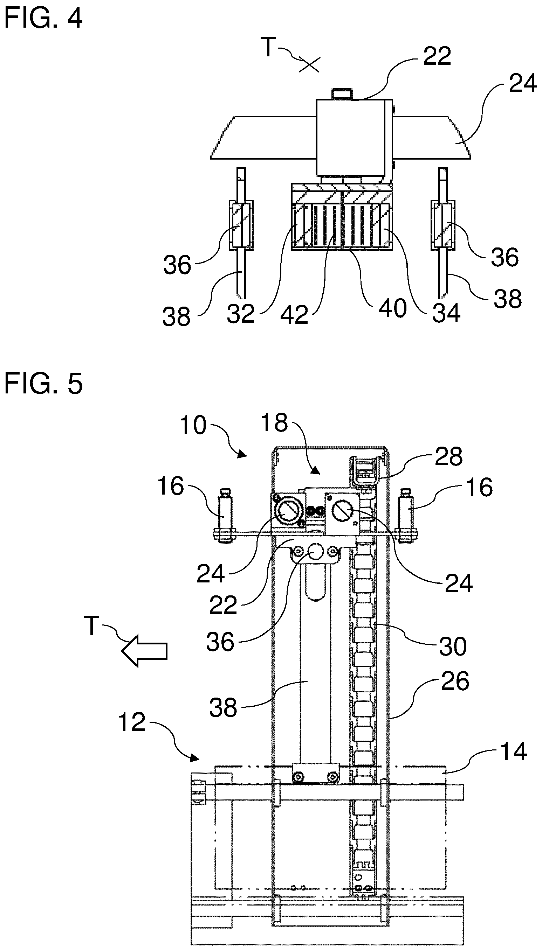

Wie insbesondere in den Figuren 3 und 4 dargestellt ist, können die Positionierelemente 22 zum selbsttätigen mittigen Positionieren beispielsweise mit Magneten 32, 34 ausgestattet sein. Die Magnete 32, 34 stehen in magnetischer Wechselwirkung mit Magneten 36, die von den Führungselementen 14 getragen sind (siehe Figur 3). Vorzugsweise sind die Magnete 32, 34, 36 als Permanentmagnete ausgeführt. Durch die Magnete 32, 34, 36 sind die Positionierelemente 22 und somit die Positioniervorrichtung 18 berührungslos mit den Führungselementen 14 zum Folgen einer Bewegung der Führungselemente 14 gekoppelt. Aus Gründen der Übersichtlichkeit ist in Figur 3 jeweils nur ein Magnet der Magnete 32, 34 und 36 mit einem Bezugszeichen versehen.

Zweckmäßig trägt jedes Führungselement 14 einen der Magnete 36 an einer Position direkt oberhalb des jeweiligen Führungselements 14. Beispielsweise kann jeweils ein vertikal ausgerichtetes Verlängerungselement 38 oben an einem jeweiligen Führungselements 14 angebracht sein. An einem freien Ende der Verlängerungselemente 38 ist jeweils einer der Magnete 36 angebracht. Zweckmäßig können die Magnete 36 höhenverstellbar an dem jeweiligen Verlängerungselement 38 angebracht sein, z. B. durch Befestigung an einem vertikal ausgerichteten Langloch in dem jeweiligen Verlängerungselement 38. Die Magnete 36 sind so ausgerichtet, dass sie zu beiden Längsseiten des jeweiligen Führungselements 14 hin wirkend sind. Beispielsweise wirkt ein magnetischer Nordpol zu einer Längsseite des jeweiligen Führungselements 14, und ein magnetischer Südpol wirkt zur entgegengesetzten Längsseite des jeweiligen Führungselements 14 hin.

Die Magnete 32, 34, 36 sind auf gleicher Höhe angeordnet. Die Magnete 32, 34, 36 sind so ausgerichtet, dass sie sich jeweils mit dem gleichen Magnetpol gegenüberliegen. Beispielsweise liegt ein magnetischer Nordpol des Magnets 36 einem magnetischen Nordpol eines der Magnete 32 gegenüber, und ein magnetischer Südpol desselben Magnets 36 liegt einem magnetischen Südpol eines der Magnete 34 gegenüber. Die Magnete 32 und 36 sowie die Magnete 34 und 36 stoßen sich somit jeweils paarweise voneinander ab.

Die Magnete 32 und 34 jedes Positionierelements 22 sind voneinander durch einen Abstandhalter 40 beabstandet. Der Magnet 32 und der Magnet 34 sind mit unterschiedlicher Magnetpolarität nach außen gewandt. Beispielsweise ist der Magnet 32 mit einem magnetischen Nordpol nach außen gewandt, und der Magnet 34 ist mit einem magnetischen Südpol nach außen gewandt. Wie in Figur 5 dargestellt ist, kann der Abstandhalter 40 beispielsweise mindestens ein elastisches Element 42, z. B. eine Druckfeder, aufweisen. Das elastische Element 42 kann die Magnete 32 und 34 zweckmäßig gegeneinander und/oder gegen eine Innenwand des Positionierelements 32 abstützen. Es ist auch möglich, dass die Magnete 32, 34 fest an dem jeweiligen Positionierelement 32 angebracht sind, z. B. durch Verschrauben oder Verkleben usw.

Bei einer Verstellung der Führungselemente 14 quer zur Transportrichtung T bewegen sich die Magnete 36 zusammen mit den Führungselementen 14. Dadurch verändert sich eine magnetische Beeinflussung der Magnete 32, 34 durch die Magnete 36. Die Magnete 36 stoßen die Magnete 32, 34 derart ab, dass diese jeweils die Positionierelemente 22 entlang der Führungselemente 14 bewegen. Zum Einnehmen eines Gleichgewichtszustands positionieren sich die Positionierelemente 22 zweckmäßig jeweils mittig zwischen den benachbarten Magneten 36. die Positionierelemente 22 können sich somit selbsttätig zwischen den jeweiligen Führungselementen 14 zentrieren. Dadurch werden auch die Sensoren 16, die von den Positionierelementen 22 getragen sind, mittig über den jeweils zugeordneten Transportgassen 20 positioniert. Im Gleichgewichtszustand können gleichgroße Magnetkräfte auf die Magnete 32, 34 wirken. Ein Abstand zwischen einem Paar aus den Magneten 32 und 36 entspricht einem Abstand zwischen einem Paar aus den Magneten 34 und 36.

Auch wenn hierin ein besonders bevorzugtes Ausführungsbeispiel mit einer magnetischen Positioniervorrichtung 18 beschrieben ist, ist es möglich, dass die Positioniervorrichtung zum mittigen Positionieren der Sensoren auf einem anderen oder einem zusätzlichen Wirkprinzip beruht, z. B. einem rein mechanischen oder einem motorischen Wirkprinzip (nicht dargestellt).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der mehreren Führungselemente, der mehreren Sensoren und/oder der Positioniervorrichtung des unabhängigen Anspruchs 1 offenbart.

### Bezugszeichenliste

- 10: Vorrichtung zum Überwachen von Behältern
- 12: Transportvorrichtung
- 14: Führungselement
- 16: Sensor
- 18: Positioniervorrichtung
- 20: Transportgasse
- 22: Positionierelement
- 24: (weiteres) Führungselement
- 26: Halterung
- 28: Rinnenelement
- 30: Kanal
- 32: Erster Magnet
- 34: Zweiter Magnet
- 36: Magnet
- 38: Verlängerungselement
- 40: Abstandhalter
- 42: Elastisches Element
- T: Transportrichtung

## Patentansprüche

1. Vorrichtung (10) zum Überwachen von Behältern, vorzugsweise zur Einzeltransportgassenabfragung, für eine Behälterbehandlungsanlage, aufweisend:
mehrere Führungselemente (14), wobei:
- die mehreren Führungselemente (14) quer zu einer Transportrichtung (T) der Behälter voneinander beabstandet sind;
- die mehreren Führungselemente (14) zwischen sich mehrere Transportgassen (20) für die Behälter bilden; und
- die mehreren Führungselemente (14) quer zu der Transportrichtung (T) zum Anpassen einer Breite der mehreren Transportgassen (20) verstellbar sind;
mehrere Sensoren (16), die jeweils über einer der mehreren Transportgassen (20) angeordnet sind; und
eine Positioniervorrichtung (18), die dazu ausgebildet ist, die mehreren Sensoren (16) bei einer Verstellung der mehreren Führungselemente (14) quer zu der Transportrichtung (T) selbsttätig mittig über der jeweiligen Transportgasse (20) zu positionieren, vorzugsweise durch Bewegen der mehreren Sensoren (16).

2. Vorrichtung (10) nach Anspruch 1, wobei die Positioniervorrichtung (18) dazu ausgebildet ist:
die mehreren Sensoren (16) bei der Verstellung der mehreren Führungselemente (14) in einer Querrichtung quer zu der Transportrichtung (T) selbsttätig jeweils mittig bezüglich der Querrichtung zwischen zwei benachbarten Führungselementen (14) der mehreren Führungselemente (14) zu positionieren, vorzugsweise durch Bewegen der mehreren Sensoren (16); und/oder
bei der Verstellung der mehreren Führungselemente (14) quer zu der Transportrichtung (T) eine mittige Positionierung der mehreren Sensoren (16) über der jeweiligen Transportgasse (20) zu halten, vorzugsweise durch Bewegen der mehreren Sensoren (16).

3. Vorrichtung (10) nach Anspruch 1 oder Anspruch 2, wobei:
die Positioniervorrichtung (18) mit den mehreren Führungselementen (14) zum Folgen einer Bewegung der mehreren Führungselemente (14) gekoppelt ist, vorzugsweise berührungslos oder berührend; und/oder
die Positioniervorrichtung (18) mit den mehreren Sensoren (16) zum Bewirken einer Bewegung der mehreren Sensoren (16) gekoppelt, vorzugsweise berührungslos oder berührend.

4. Vorrichtung (10) nach einem der vorherigen Ansprüche, wobei:
die Positioniervorrichtung (18) eine magnetische, mechanische und/oder motorische Positioniervorrichtung ist; und/oder
die Positioniervorrichtung (18) dazu ausgebildet ist, die mehreren Sensoren (16) selbsttätig mittels Magnetkraft jeweils mittig über der jeweiligen Transportgasse (20) zu positionieren; und/oder
die Positioniervorrichtung (18) dazu ausgebildet ist, eine mittige Positionierung der mehreren Sensoren (16) über der jeweiligen Transportgasse (20) mittels Magnetkraft, vorzugsweise permanent, zu halten.

5. Vorrichtung (10) nach einem der vorherigen Ansprüche, wobei:
die mehreren Führungselemente (14) jeweils einen Magnet (36), vorzugsweise Permanentmagnet, tragen, wobei vorzugsweise:
die mehreren Führungselemente (14) den Magnet (36) jeweils mittels eines Verlängerungselements (38), vorzugsweise eines vertikal ausgerichteten Verlängerungselements (38), tragen.

6. Vorrichtung (10) nach Anspruch 5, wobei:
die von den mehreren Führungselementen (14) getragenen Magnete (36) beidseitig des jeweiligen Führungselements (14) wirkend angeordnet sind; und/oder
die von den mehreren Führungselementen (14) getragenen Magnete (36) höhenverstellbar angebracht sind, vorzugweise mittels Befestigung an einem vertikal ausgerichteten Langloch.

7. Vorrichtung (10) nach einem der vorherigen Ansprüche, wobei:
die Positioniervorrichtung (18) mehrere Positionierelemente (22), die jeweils einen der mehreren Sensoren (16) tragen, und mindestens ein weiteres Führungselement (24), das sich angewinkelt, vorzugsweise quer, zu der Transportrichtung (T) erstreckt, aufweist, wobei die mehreren Positionierelemente (22) bewegbar, vorzugsweise verschiebbar, an dem mindestens einen weiteren Führungselement (24) geführt sind.

8. Vorrichtung (10) nach Anspruch 7, wobei:
die mehreren Positionierelemente (22) jeweils mindestens einen Magnet (32, 34), vorzugsweise Permanentmagnet, aufweisen.

9. Vorrichtung (10) nach Anspruch 8, wobei:
die von den mehreren Führungselementen (14) getragenen Magnete (36) und die Magnete (32, 34) der mehreren Positionierelemente (22) zum mittigen Positionieren der mehreren Sensoren (16) in magnetischer Wechselwirkung miteinander stehen; und/oder
die von den mehreren Führungselementen (14) getragenen Magnete (36) und die Magnete (32, 34) der mehreren Positionierelemente (22) auf gleicher Höhe und/oder entlang einer Achse angeordnet sind; und/oder
die von den mehreren Führungselementen (14) getragenen Magnete (36) und die Magnete (32, 34) der mehreren Positionierelemente (22) sich zum Abstoßen der mehreren Positionierelemente (22) jeweils paarweise gleichpolig gegenüberliegen.

10. Vorrichtung (10) nach Anspruch 8 oder Anspruch 9, wobei:
die mehreren Positionierelemente (22) jeweils einen ersten Magnet (32) und einen zweiten Magnet (34) aufweisen, die auf einander entgegengesetzten Seiten des jeweiligen Positionierelements (22) und zwischen von zwei benachbarten Führungselementen (14) getragenen Magneten (36) angeordnet sind.

11. Vorrichtung (10) nach Anspruch 10, wobei:
die mehreren Positionierelemente (22) jeweils einen Abstandhalter (40) aufweisen, der den ersten Magnet (32) und den zweiten Magnet (34) beabstandet zueinander hält; und/oder
der erste Magnet (32) und der zweite Magnet (34) mit unterschiedlicher Magnetpolarität nach außen gewandt sind; und/oder
der erste Magnet (32) und/oder der zweite Magnet (34) mittels eines elastischen Elements (42), vorzugsweise einer Druckfeder, vorgespannt ist, vorzugsweise nach außen; und/oder
der erste Magnet (32) und der zweite Magnet (34) mittels eines elastischen Elements (42), vorzugsweise einer Druckfeder, aneinander abgestützt sind.

12. Vorrichtung (10) nach einem der vorherigen Ansprüche, wobei:
die mehreren Sensoren (16) dazu ausgebildet sind, einen Durchlauf eines Behälters durch die jeweilige Transportgasse (20) zu erfassen; und/oder
die mehreren Sensoren (16) als taktile oder berührungslose Sensoren ausgeführt sind, vorzugsweise als Lichttaster oder Ultraschallsensoren.

13. Verfahren zum Positionieren mehrerer Sensoren (16) zum Überwachen von Behältern, vorzugsweise zur Einzeltransportgassenabfragung, für eine Behälterbehandlungsanlage, aufweisend:
Verstellen einer Breite mehrerer Transportgassen (20) für die Behälter; und
selbsttätiges mittiges Positionieren der mehreren Sensoren (16) über jeweils einer der mehreren Transportgassen (20) während des Verstellens der Breite der mehreren Transportgassen (20).

14. Verfahren nach Anspruch 13, wobei
das selbsttätige mittige Positionieren durch Magnetkraft, mechanisch und/oder motorisch bewirkt ist.

15. Verfahren nach Anspruch 13 oder Anspruch 14, wobei das Verfahren die Vorrichtung (10) nach einem der Ansprüche 1 bis 12 verwendet.
